# EUROPEAN PATENT SPECIFICATION

(11) **EP 4 378 988 B1**
(45) Date of publication and mention of the grant of the patent: **10.09.2025**
(21) Application number: 23823292.0
(22) Date of filing: 10.07.2023
(51) Int. Cl.: C08L 7/00, C08L 9/00, C08L 77/10, C08K 7/26, C08K 5/548, G01M 17/02, B60C 17/00, B60C 1/00

(54) **LATERAL SUPPORTING RUBBER FOR RUN-FLAT TIRE, AND RUN-FLAT TIRE AND DETECTION METHOD**
SEITLICHER STÜTZGUMMI FÜR NOTLAUFREIFEN SOWIE NOTLAUFREIFEN UND DETEKTIONSVERFAHREN
CAOUTCHOUC DE SUPPORT LATÉRAL POUR PNEU À AFFAISSEMENT LIMITÉ, ET PNEU À AFFAISSEMENT LIMITÉ ET PROCÉDÉ DE DÉTECTION

(30) Priority: 24.11.2022 CN 202211484120
(43) Date of publication of application: 05.06.2024
(73) Proprietor: Qingdao Doublestar Tire Industrial Co., Ltd., Qingdao, Shandong 266000 (CN)
(72) Inventor: CHAI, Yongsen, Qingdao, Shandong 266000 (CN); WANG, Lufei, Qingdao, Shandong 266000 (CN); WANG, Jun, Qingdao, Shandong 266000 (CN); ZHANG, Junhua, Qingdao, Shandong 266000 (CN); SU, Ming, Qingdao, Shandong 266000 (CN); DONG, Kang, Qingdao, Shandong 266000 (CN); HAN, Fengjin, Qingdao, Shandong 266000 (CN); CHEN, Yating, Qingdao, Shandong 266000 (CN); XU, Bing, Qingdao, Shandong 266000 (CN); DENG, Ling, Qingdao, Shandong 266000 (CN); LIU, Wenguo, Qingdao, Shandong 266000 (CN); ZHAO, Xiaodong, Qingdao, Shandong 266000 (CN); HUANG, Yigang, Qingdao, Shandong 266000 (CN); JIAO, Dongdong, Qingdao, Shandong 266000 (CN); ZHANG, Jing, Qingdao, Shandong 266000 (CN); HAN, Dan, Qingdao, Shandong 266000 (CN); XU, Jingjing, Qingdao, Shandong 266000 (CN); LIANG, Xue, Qingdao, Shandong 266000 (CN); ZHANG, Mengmeng, Qingdao, Shandong 266000 (CN); WANG, Hongxia, Qingdao, Shandong 266000 (CN); MA, Lihua, Qingdao, Shandong 266000 (CN); GENG, Zhao, Qingdao, Shandong 266000 (CN)
(74) Representative: J A Kemp LLP
(86) International application number: PCT/CN2023/106541
(87) International publication number: WO 2023/241726

(56) References cited:
- EP-A1- 0 613 795
- CN-A- 104 744 746
- CN-A- 110 804 223
- CN-A- 115 716 943
- KR-B1- 100 894 453
- US-A1- 2009 250 151

## Description

### CROSS REFERENCE TO RELATED APPLICATIONS

The present application claims priority to the Chinese Patent Application No. 202211484120.4, filed to the Chinese patent office on November 24^{th}, 2022 and entitled "Outside Support Rubber for Sustainable Full Run-flat Tire and Test Method Therefor".

### TECHNICAL FIELD

The present invention belongs to the technical field of tire manufacture, in particular relates to an outside support rubber for a run-flat tire, a run-flat tire and a test method.

### BACKGROUND

The run-flat tire has stronger rigidity due to a supporting structure provided on each sidewall, allowing the vehicle to drive stably for 80km at a speed of 80km/h even after the tire loses pressure, which solves the safety problem of tire blowout to a certain extent. However, the supporting structure of a traditional run-flat tire is a support rubber which is an entirety, it is difficult to reconcile supporting performance with fatigue resistance, problems such as excessive thickness, excessive hardness and high heat generation are caused, which can easily lead to problems such as loud noise, high rolling resistance, high fuel consumption and poor comfort of the run-flat tire, and therefore, the run-flat tire cannot be applied to ordinary vehicles.

At present, most of support rubber for a traditional run-flat tire is made by blending natural rubber and butadiene rubber, adding low-structural carbon black or silica as a filler and using a high-strength vulcanization system so as to meet the supporting performance and the tear resistance for the support rubber. However, the natural rubber has the disadvantage of poor heat resistance, and the traditional run-flat tire has a thicker tire wall and thus the heat cannot be dissipated in time, so that the support rubber will be subjected to thermal damage and mechanical damage when the run-flat tire is driving at zero pressure.

The support rubber for the traditional run-flat tire is prone to fatigue damage when driving at zero pressure, and the tire cannot be reused after being repaired and needs to be directly replaced with a new tire, which is costly and is not environmental-friendly. When the run-flat tire is driving at zero pressure, an outside part of the support rubber mainly plays a supporting role and is subjected to certain tensile deformation, and therefore, the support rubber needs to have better supporting performance and fatigue resistance. Besides, a traditional test method for the support rubber can only be used to evaluate rubber performance of a new tire, but cannot evaluate performance of the support rubber during reuse.

Known support rubbers for run-flat tires are disclosed in EP 0613795 A and US 2009/250151 A.

### SUMMARY

For overcoming at least one of defects existing in the prior art, the present invention provides an outside support rubber for a run-flat tire, a run-flat tire, and a test method.

A first aspect of the present invention provides an outside support rubber for a run-flat tire, wherein a modulus loss rate of the outside support rubber satisfies: |1-G'₂/G'₁|≤6%, wherein G'₁ is a modulus obtained before a zero-pressure driving simulation of the run-flat tire, G'₂ is a modulus obtained after the zero-pressure driving simulation of the run-flat tire, and G'₁ and G'₂ are both measured under condition that a temperature is 55-60°C, a frequency is 600cpm, and a strain is 7%;
wherein G'1 , G'2 , the modulus loss rate and the zero-pressure driving simulation of the run-flat tire are obtained by the following method steps:
vulcanization: placing an unvulcanized outside support rubber for the run-flat tire in a mold cavity of a rubber processing analyzer, and setting a vulcanization temperature to be 161°C, a vulcanization time to be 15min, a strain to be 0.7% and a frequency to be 100cpm;
ordinary driving simulation of the run-flat tire: after vulcanization, lowering the temperature to 55°C-60°C, setting the strain to be 42% and the frequency to be 60cpm, and keeping the temperature, the strain and the frequency for 5min; and then keeping the temperature, setting the strain to be 7% and the frequency to be 600cpm, and recording the modulus G'₁ of the outside support rubber;
zero-pressure driving simulation of the run-flat tire: after the modulus G'₁ is measured, raising the temperature to 150°C-155°C, setting the strain to be 42% and the frequency to be 400-600cpm, and keeping the temperature, the strain and the frequency for 30min; then, lowering the temperature to 55°C-60°C, setting the strain to be 7% and the frequency to be 600cpm, and recording the modulus G'₂ of the outside support rubber; and
calculation of the modulus loss rate: calculating G'₂/G'₁ to represent a modulus retention rate, and calculating |1-G'₂/G'₁| to represent the modulus loss rate.

In some embodiments of the first aspect of the present invention, a heat accumulation of the outside support rubber satisfies: Δ T ≤ 30°C, wherein ΔT=T₂-T₁, T₁ is an initial temperature set by lowering temperature after vulcanization for 20min under condition that a temperature is 161°C and a strain angle is 0.2°, and T₂ is measured at an endpoint after 30min under condition that the strain is 28% and the frequency is 700cpm.

In some embodiments of the first aspect of the present application, a tensile strength retention rate of the outside support rubber satisfies: T.S.(150°C)/T.S.(23°C)≥80%, wherein T.S.(150°C) is a tensile strength of the outside support rubber at 150°C; and T.S.(23°C) is a tensile strength of the outside support rubber at 23°C.

In some embodiments of the first aspect of the present invention, the outside support rubber comprises components in parts by weight:
70-90 parts of liquid process natural rubber;
40-60 parts of butadiene rubber;
1-10 parts of aramid short fiber;
20-40 parts of carbon black;
2-3 parts of first anti-aging agent;
3-5 parts of activator;
1-2 parts of sulfur;
2-3 parts of accelerator; and
0.5-1.5 parts of anti-reversion agent.

In some embodiments of the first aspect of the present invention, the liquid process natural rubber comprises the components in parts by weight:
40-60 parts of rubber latex;
20-40 parts of silica;
2-4 parts of silane coupling agent; and
0.5-1.5 parts of other compounding agents;
wherein other compounding agents are at least one of a second anti-aging agent and a dispersant.

In some embodiments of the first aspect of the present invention, the butadiene rubber is modified low cis-polybutadiene rubber, which uses a lithium-based catalyst and has cis content of 35%-45%.

In some embodiments of the first aspect of the present invention, a length of the aramid short fiber is 2-5mm.

In some embodiments of the first aspect of the present invention, the carbon black has an iodine absorption value of 35-50g/kg, and a dibutyl phthalate absorption value of 110×10⁻⁵-130×10⁻⁵m³/kg.

In some embodiments of the first aspect of the present invention, a specific surface area of the silica is 90-120m²/g; and the silane coupling agent is at least one of bis-(propyltriethoxysilane)tetrasulfide, bis-(propyltriethoxysilane)disulfide, and mercaptopropyltriethoxysilane.

A second aspect of the present invention provides a run-flat tire, comprising the outside support rubber for the run-flat tire according to any one of the embodiments described above, wherein the outside support rubber is located between an inside support rubber and a carcass.

A third aspect of the present invention provides a test method for the outside support rubber for the run-flat tire according to any one of the embodiments described above, comprising following steps:
vulcanization: placing an unvulcanized outside support rubber for the run-flat tire in a mold cavity of a rubber processing analyzer, and setting a vulcanization temperature to be 161°C, a vulcanization time to be 15min, a strain to be 0.7% and a frequency to be 100cpm;
ordinary driving simulation of the run-flat tire: after vulcanization, lowering the temperature to 55°C-60°C, setting the strain to be 42% and the frequency to be 60cpm, and keeping the temperature, the strain and the frequency for 5min; and then keeping the temperature, setting the strain to be 7% and the frequency to be 600cpm, and recording a modulus G'₁ of the outside support rubber;
zero-pressure driving simulation of the run-flat tire: after the modulus G'₁ is measured, raising the temperature to 150°C-155°C, setting the strain to be 42% and the frequency to be 400-600cpm, and keeping the temperature, the strain and the frequency for 30min; then, lowering the temperature to 55°C-60°C, setting the strain to be 7% and the frequency to be 600cpm, and recording a modulus G'₂ of the outside support rubber;
calculation of a modulus loss rate: calculating G'₂/G'₁ to represent a modulus retention rate, and calculating |1-G'₂/G'₁| to represent a modulus loss rate; and
two durability tests for the run-flat tire: the run-flat tire comprises the outside support rubber, and the outside support rubber is located between an inside support rubber and a carcass, performing an indoor machine tool test on the run-flat tire by driving the run-flat tire for 30min at a speed of 60km/h in a zero-pressure state to perform a first durability test, then, standing the tire for 24h, then, performing a second durability test at a non-zero pressure, and recording a test result.

In some embodiments of the third aspect of the present invention, in the step of ordinary driving simulation of the run-flat tire, the temperature used to measure the modulus G'₁ is 60°C; and after the modulus G'₁ is measured, in the step of zero-pressure driving simulation of the run-flat tire, raising the temperature to 150°Cand setting the frequency to be 480cpm, then keeping the temperature and the frequency for 30min.

Compared with the prior art, the present invention has the advantages and beneficial effects that:
(1) the outside support rubber for the run-flat tire provided in at least one embodiment of the present application is low in modulus loss rate, higher in modulus retention rate, better in durability, more excellent in tensile retention rate, better in supporting performance and tensile fatigue resistance, excellent in low heat generation performance, and has long service life, so that the outside support rubber will not be damaged and can be further used after the run-flat tire is driven in the zero-pressure state, it is unnecessary to replace the tire, and sustainability, low carbon, environmental protection and reuse are achieved;
(2) in the outside support rubber for the run-flat tire provided in at least one embodiment of the present application, the liquid process natural rubber, the low cis-polybutadiene rubber and the aramid short fiber are used, wherein the liquid process natural rubber is prepared by adding silica and the silane coupling agent into natural rubber latex, so that the dispersibility of a filler is improved, the flexural resistance is improved, and the heat generation is reduced;
(3) in the outside support rubber for the run-flat tire provided in at least one embodiment of the present application, by adding the aramid short fiber, the tear resistance of the rubber is improved from a physical level, damage caused by tensile fatigue to rubber is avoided, and the service life of the run-flat tire is greatly prolonged, so that the run-flat tire can be reused after being repaired, and a sustainable environmental protection concept is embodied;
(4) in the run-flat tire provided in at least one embodiment of the present application, the outside support rubber with above-mentioned performances is disposed between the inside support rubber and the carcass, the outside support rubber will not be damaged even if the tire is driven at zero pressure, so that the run-flat tire can be reused after being repaired, the service life of the run-flat tire is prolonged, the cost is reduced, and the environment is protected; and
(5) according to the test method for the outside support rubber for the run-flat tire provided in at least one embodiment of the present application, the outside support rubber is tested under different parameters to simulate different driving states of the run-flat tire, the modulus loss rate is calculated to predict the supporting performance of the outside support rubber during reuse, and the test process is consistent with a durability test result of the run-flat tire at zero pressure.

### BRIEF DESCRIPTION OF DRAWINGS

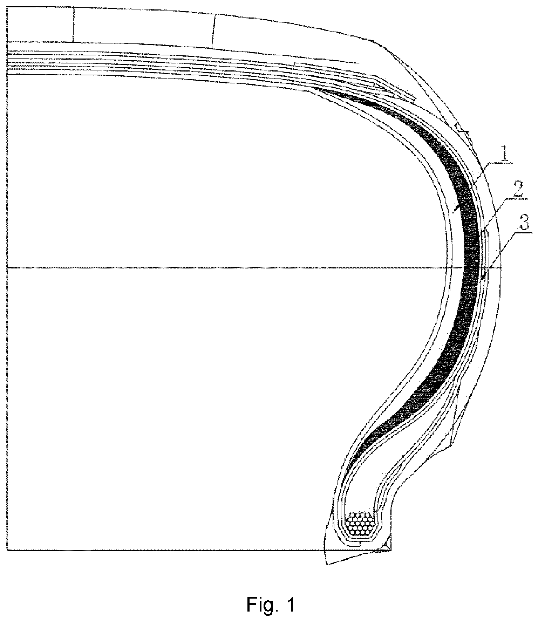

Fig. 1 is a schematic diagram of a cross section of a run-flat tire provided in an embodiment of the present invention, and
Fig. 2 is a flow diagram of a test method for an outside support rubber of a run-flat tire provided in an embodiment of the present invention.

In which: 1, inside support rubber, 2, outside support rubber, and 3, carcass.

### DETAILED DESCRIPTION OF EMBODIMENTS

The technical solutions in specific embodiments of the present invention will be described clearly and completely below with reference to the accompanying drawings.

A first aspect of the present invention provides an outside support rubber 2 for a run-flat tire, which serves as a part of an support rubber and is located between an inside support rubber 1 and a carcass 3, so that a sufficient supporting performance, a tensile fatigue resistance and an excellent low heat generation performance can be ensured.

In some embodiments of the first aspect of the present invention, a modulus loss rate of the outside support rubber satisfies: |1-G'₂/G'₁|@600cpm ≤ 6%, wherein G'₁ and G'₂ are respectively moduli obtained before and after a zero-pressure driving simulation of the run-flat tire, and G'₁ and G'₂ are both measured under the test condition that a temperature is 60°C, a frequency is 600cpm, and a strain is 7%. The smaller the modulus loss rate, the better the modulus retention rate and the higher the reusability of the outside support rubber for the run-flat tire, and the excellent supporting performance is ensured, wherein "@600cpm" in |1-G'₂/G'₁|@600cpm indicates that G'₁ and G'₂ are measured at a frequency of 600cpm.

In some embodiments of the first aspect of the present invention, a modulus loss rate of the outside support rubber for the run-flat tire satisfies: |1-G'₂/G'₁|≤6%, wherein G'₁ and G'₂ are respectively moduli obtained before and after a zero-pressure driving simulation of the run-flat tire, and G', and G'₂ are both measured under the test condition that a temperature is 55-60°C, a frequency is 600cpm (circles per minute), and a strain is 7%. The smaller the modulus loss rate, the better the modulus retention rate and the higher the reusability of the outside support rubber for the run-flat tire, and the excellent supporting performance is ensured.

In above embodiments, the zero-pressure driving simulation of the run-flat tire can be performed by a RPA (Rubber processing analyzer) to obtain the moduli G'₁ and G'₂ before and after the zero-pressure driving simulation. A specific test method may refer to the test method provided in a third aspect of the present application.

In some embodiments of the first aspect of the present invention, a heat accumulation of the outside support rubber for the run-flat tire satisfies: ΔT≤30°C, wherein ΔT=T₂-T₁, T₁ is an initial temperature set by lowering the temperature after vulcanization for 20min under condition that a temperature of 161 °C and a strain angle of 0.2° , and T₂ is measured at an endpoint after 30 min under condition that a strain is 28% and a frequency is 700cpm. The smaller the value of ΔT, the lower the heat generation or the rapider the heat dissipation of the outside support rubber for the run-flat tire, which can keep lower heat and prolong the service life of the support rubber.

In above embodiments, the present invention further provides a heat accumulation test method for the outside support rubber for the run-flat tire. Firstly, the outside support rubber is vulcanized for 20min at a temperature of 161 °C and a strain angle of 0.2°, then, the temperature is lowered to the initial temperature T₁, next, the outside support rubber is shear strained to 28% at a frequency of 700cpm, and the temperature reaches to T₂ after 30min. The test can be performed by a RPA (Rubber processing analyzer). The initial temperature T₁ can be set according to an actual situation, and a specific value thereof is not limited in the present application as long as it is ensured that the initial temperature T₁ is the same during every heat accumulation test. In some embodiments, the initial temperature T₁ is set to be 30°C-50°C. Optionally, the initial temperature T₁ is set to be 40°C.

In some embodiments of the first aspect of the present invention, a tensile strength retention rate of the outside support rubber for the run-flat tire satisfies: T.S.(150°C)/T.S.(23°C)≥80%, so as to ensure that the tire can continue to be used after flat running, wherein T.S.(150°C) is a tensile strength at 150°C; and T.S.(23°C) is a tensile strength at 23°C.

In some embodiments of the first aspect of the present invention, the outside support rubber for the run-flat tire in the present application comprises the components in parts by weight: 70-90 parts of liquid process natural rubber; 40-60 parts of butadiene rubber; 1-10 parts of aramid short fiber; 20-40 parts of carbon black; 2-3 parts of first anti-aging agent; 3-5 parts of activator; 1-2 parts of sulfur; 2-3 parts of accelerator; and 0.5-1.5 parts of anti-reversion agent. Compared with a traditional formula of a single support rubber made by blending natural rubber and butadiene rubber, heat generated by the compound obtained according to the formula in the present application can be reduced by 30%, and the flexural resistance is improved by at least two times while a certain strength is maintained.

In some embodiments of the first aspect of the present invention, the liquid process natural rubber comprises the components in parts by weight: 40-60 parts of rubber latex; 20-40 parts of silica; 2-4 parts of silane coupling agent; and 0.5-1.5 parts of other compounding agents; wherein the other compounding agents comprise at least one of a second anti-aging agent and a dispersant.

The liquid process natural rubber is made by mixing silica, the silane coupling agent and other compounding agents in natural rubber latex in a liquid state, so that the dispersibility of the filler is improved.

In some embodiments of the liquid process natural rubber, silica is high-dispersibility silica and has a specific surface area of 90m-120m²/g, and the lower specific surface area is beneficial to dispersion; the silane coupling agent is at least one of bis-(propyltriethoxysilane)tetrasulfide, bis-(propyltriethoxysilane)disulfide, and mercaptopropyltriethoxysilane; optionally, the second anti-aging agent is 4020; and the dispersant is optionally selected from at least one of a mixture of fatty acid derivatives and fatty acid zinc salts.

In some embodiments of the first aspect of the present invention, the butadiene rubber in the embodiments of the present application is modified low cis-polybutadiene rubber, which uses a lithium-based catalyst and has a cis content of 45% with an end functionalized. An end-functionalized group of the modified low cis-polybutadiene rubber is beneficial to the dispersion of the filler, further reduces heat generation and hysteresis, and ensures a good processing performance.

In some embodiments of the first aspect of the present invention, the butadiene rubber in the embodiments of the present application is modified low cis-polybutadiene rubber, which uses a lithium-based catalyst and has a cis content of 35 to 45% with an end functionalized. An end-functionalized group of the modified low cis-polybutadiene rubber is beneficial to the dispersion of the filler, reduces the agglomeration of the filler, further reduces heat generation and hysteresis, and ensures a good processing performance. Optionally, the modified low cis-polybutadiene rubber adopts BR1250H produced by Japanese Zeon Corportion.

In some embodiments of the first aspect of the present invention, a length of a microstructure of the aramid short fiber is 2-5mm. Appropriate fiber length can ensure sufficient physical and mechanical strength, improve processing performance and dispersibility and improve the tear resistance of the rubber from a physical level, thus damage caused by tensile fatigue is avoided, the flexural resistance and the supporting performance are enhanced, the rubber is not easy to break, and the service life of the run-flat tire is greatly prolonged, so that the run-flat tire can be reused after being repaired, and a sustainable environmental protection concept is embodied.

In some embodiments of the first aspect of the present invention, the carbon black has an iodine absorption value of 35-50g/kg, and a DBP (dibutyl phthalate) absorption value of 110×10-⁵-130×10⁻⁵m³/kg. The high-structural carbon black with a low specific surface area can reduce the heat generation while ensuring a sufficient mechanical reinforcement performance.

In some embodiments of the first aspect of the present invention, the first anti-aging agent comprises 1-2 parts of 4020 (N-(1,3-dimethyl)butyl-N'-phenyl-p-phenylenediamine) and 0-2 parts of RD (2,2,4-trimethyl-1,2-dihydroquinoline polymer).

In some embodiments of the first aspect of the present invention, the activator comprises 3-5 parts of zinc oxide and 0-2 parts of stearic acid.

In some embodiments of the first aspect of the present application, the accelerator comprises 0.5-1.5 parts of TiBTD (diisobutylthiuram disulfide) and 1.5-2.5 parts of NS (N-tert-butyl-2-benzothiazole sulfenamide).

In some embodiments of the first aspect of the present invention, the anti-reversion agent is at least one of PK900 (1,3-bis(citraconimidomethyl)benzene) and WY9188 (1,6-bis(N,N-dibenzylthiocarbamoyldithio)-hexane). These anti-reversion agent can improve the thermal stability of a cross bond of the rubber and further improve the heat resistance of the rubber.

Compared with a traditional formula of a single support rubber made by blending natural rubber and butadiene rubber, the present disclosure strengthens the supporting retention performance and the fatigue resistance for the outside part of the support rubber, and uses the liquid process natural rubber and the modified low cis-butadiene rubber, and at the same time, the aramid short fiber is added to strengthen the physical and mechanical strengths of the product, so that the outside support rubber is sufficient in modulus retention rate, lower in heat generation and excellent in mechanical strength, the outside support rubber can be reused and thus the frequency of tire replacement is reduce, and has great advantages in aspects of sustainability and environmental protection.

A second aspect of the present invention provides a run-flat tire, comprising the outside support rubber 2 in any one of above embodiments, wherein the outside support rubber 2 is located between an inside support rubber 1 and a carcass 3.

In some embodiments of the second aspect of the present invention, the inside support rubber 1, the outside support rubber 2 and the carcass 3 are respectively disposed on sidewalls of the run-flat tire in sequence from inside to outside in a width direction of the cross section of the tire.

In above run-flat tire, the inside support rubber 1 may be prepared by adopting an existing support rubber formula, may have an existing structure, and may also be obtained by limited conventional adjustment performed by those skilled in the art according to performances of the outside support rubber on the basis of the existing support rubber formula or structure. In other embodiments, the inside support rubber may also be made according to relevant contents disclosed in Chinese patent application CN115678128A. The present application focuses on the outside support rubber, and the inside support rubber is not described in detail.

A preparation method for the above-mentioned outside support rubber for the run-flat tire in the present application comprises the following steps:
preparation of the liquid process natural rubber: silica, a silane coupling agent and other compounding agents are dispersed into water by ultrasonic treatment according to the above-mentioned parts by weight, then, silica, the silane coupling agent and other compounding agents are mixed with natural rubber latex in a high-pressure jet manner, and the above-mentioned liquid process natural rubber is obtained after agglomeration, dewatering and drying;
first-stage masterbatch preparation: the above-mentioned liquid process natural rubber, butadiene rubber, carbon black, a aramid short fiber, an activator and a first anti-aging agent are added into a closed rubber mixer according to the above-mentioned parts by weight and are uniformly mixed, and then, a first-stage masterbatch is obtained by discharging; and
second-stage final compound preparation: the above-mentioned first-stage masterbatch, sulfur, an accelerator and an anti-reversion agent are added into a closed rubber mixer and are uniformly mixed, and then, a final compound is obtained by discharging. The final compound is the outside support rubber for the run-flat tire.

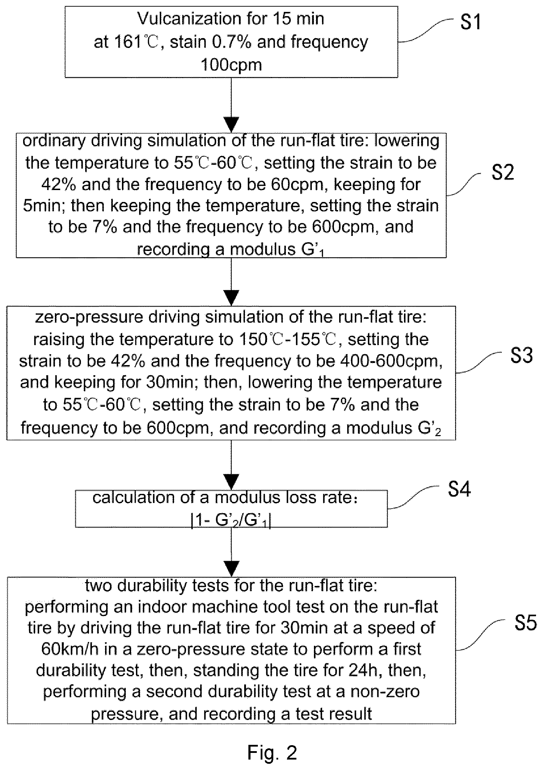

A third aspect of the present invention further provides a test method for the above-mentioned outside support rubber for the run-flat tire, as shown in Fig. 2, comprising the following steps:
S1 vulcanization: an unvulcanized outside support rubber for the run-flat tire is placed in a mold cavity of a RPA device, a vulcanization temperature is set to be 161°C, a vulcanization time is set to be 15min, a strain is set to be 0.7%, and a frequency is set to be 100cpm;
S2 ordinary driving simulation of the run-flat tire: after vulcanization, the temperature is lowered to 55°C-60°C, the strain is set to be 42%, the frequency is set to be 60cpm, and the temperature, the strain and the frequency are kept for 5min; and then keeping the temperature, the strain is set to be 7%, the frequency is set to be 600cpm, and a modulus G'₁ is recorded; G'₁ is the modulus obtained before zero-pressure driving simulation of the run-flat tire;
S3, zero-pressure driving simulation of the run-flat tire: after the modulus G'₁ is measured, the temperature is raised to 150°C-155°C, the strain is set to be 42%, the frequency is set to be 400-600cpm, and the temperature, the strain and the frequency are kept for 30min; then, the temperature is lowered to 55°C-60°C, the strain is set to be 7%, the frequency is set to be 600cpm, and a modulus G'₂ is recorded;
S4, calculation of a modulus loss rate: G'₂/G'₁ is calculated to represent a modulus retention rate and |1- G'₂/G'₁| is calculated to represent a modulus loss rate; and the smaller the modulus loss rate, the better the supporting performance of the outside support rubber for the run-flat tire during reuse; and
S5, two durability tests for the run-flat tire: the run-flat tire adopts the outside support rubber provided in any embodiment of the first aspect of the present application, and the outside support rubber is located between an inside support rubber and a carcass, an indoor machine tool test is performed on the run-flat tire by driving the run-flat tire for 30min at a speed of 60km/h in a zero-pressure state to perform a first durability test, then, the tire is stood for 24h, then, a second durability test is performed at a non-zero pressure, and a test result is used as a basis for determining the reusability of the run-flat tire.

In the above-mentioned test method for the outside support rubber for the run-flat tire provided in the present application, the RPA (Rubber processing analyzer) is adopted to simulate the change of states of the run-flat tire during driving, and above steps S1-S3 are all performed by the RPA device. Different driving states of the run-flat tire are simulated by parameters of temperature, strain and frequency, and then, the moduli of the outside support rubber in different driving states are obtained. Then, in step S4, the two durability tests are performed on a run-flat tire provided in the second aspect of the present application, the first durability test is performed at zero pressure, the second durability test is performed at a non-zero pressure, and a result simulated by the RPA device is verified according to the durability test results. Optionally, in step S5, the pressure at which the second durability test is performed is a pressure at which the tire is normally driven and which is generally 180kpa or 220kpa; and the second durability test can be performed according to the Chinese Standard GB/T4602 *Indoor Test Method for Performances of Car Tire.*

During above simulation of the driving state provided in the present application, the parameter are determined by the following method: a run-flat tire is based on a standard that the run-flat tire is driven for 30min at a speed of 60km/h in a zero-pressure state, a driving frequency of the run-flat tire is 400-600cpm and the driving frequency is calculated on the basis of an average tire perimeter of 1.5-2.5m. Different from a traditional run-flat tire, the run-flat tire provided in the second aspect of the present application is large in deformation during zero-pressure driving and high in temperature reaching up to 140°C or above and has the maximum strain reaching up to 30%. Therefore, in the test method according to the above embodiment of the present invention, more harsh test condition are selected for the simulation, the zero-pressure driving state of the run-flat tire is simulated by setting the temperature to be 150°C-155°C, the strain to be 42% (a strain angle to be 3°) and the frequency to be 400-600cpm. Considering a load capacity of the RPA device during simulation, the frequency is optionally 480cpm, and the temperature is optionally 150°C. During daily driving, the run-flat tire is the same as an ordinary tire. By calculation according to an average speed of 80km/h and the tire perimeter of 2m, the driving frequency of the tire is 600cpm, and the run-flat tire is sufficient in pressure and little in deformation during daily driving. Therefore, in the test method of above embodiments of the present invention, the ordinary driving state of the run-flat tire is simulated by setting the temperature to be 55°C-60°C, the strain to be 7% (a strain angle to be 0.5°) and the frequency to be 600cpm. Optionally, the temperature is set to be 60°C when the ordinary driving state is simulated.

In step S2, when the vulcanization temperature is lowered to 55°C-60°C, firstly, the strain is set to be 42%, the frequency is set to be 60cpm, and the temperature, the strain and the frequency are maintained for 5min, which aim at releasing stress inside the outside support rubber after vulcanization, thus the influence on the simulation results can be avoided.

In order to more clearly introduce the outside support rubber for the run-flat tire and the test method provided in the embodiment of the present invention in more details, following description will be shown in conjunction with specific embodiments.

### Embodiment 1

The outside support rubber for the run-flat tire in the present embodiment comprised the components in parts by weight: 83.75 parts of liquid process natural rubber, 50 parts of butadiene rubber, 3 parts of aramid short fiber, 25 parts of carbon black, 2.5 parts of first anti-aging agent, 5 parts of activator, 1.4 parts of sulfur, 2.5 parts of accelerator, and 1.0 part of anti-reversion agent;
wherein the liquid process natural rubber comprised 50 parts of rubber latex, 30 parts of silica, 3 parts of silane coupling agent Si69, and 0.75 parts of second anti-aging agent 4020;
the butadiene rubber was a neodymium-based butadiene rubber;
the first anti-aging agent comprised 1.5 parts of 4020 and 1.0 part of RD;
the activator comprised 4.0 parts of zinc oxide and 1.0 part of stearic acid;
the accelerator comprised 1.0 part of TiBTD and 1.5 parts of NS; and
the anti-reversion agent was WY9188.

A preparation method for the outside support rubber for the run-flat tire in the present embodiment comprised the following steps:
preparation of the liquid process natural rubber: a rubber block was prepared from the rubber latex, silica, the silane coupling agent Si69 and the second anti-aging agent 4020 according to the above-mentioned parts by weight by using a liquid process;
first-stage masterbatch preparation: the above-mentioned rubber block, the neodymium-based butadiene rubber, carbon black, the aramid short fiber, zinc oxide, stearic acid and the first anti-aging agents 4020 and RD were added into a closed rubber mixer according to the above-mentioned parts by weight and were uniformly mixed, and then, a first-stage masterbatch was obtained by discharging; and
second-stage final compound preparation: the above-mentioned first-stage masterbatch, sulfur, the accelerators TiBTD and NS and the anti-reversion agent WY9188 were added into a closed rubber mixer and were uniformly mixed, and then, a rubber was obtained by discharging.

### Embodiment 2

The outside support rubber for the run-flat tire in the present embodiment comprised the components in parts by weight: 83.75 parts of liquid process natural rubber, 50 parts of butadiene rubber, 8 parts of aramid short fiber, 25 parts of carbon black, 2.5 parts of first anti-aging agent, 5 parts of activator, 1.4 parts of sulfur, 2.5 parts of accelerator, and 1.0 part of anti-reversion agent;
wherein the liquid process natural rubber comprised 50 parts of rubber latex, 30 parts of silica, 3 parts of silane coupling agent Si69, and 0.75 parts of second anti-aging agent 4020;
the butadiene rubber was a neodymium-based butadiene rubber;
the first anti-aging agent comprised 1.5 parts of 4020 and 1.0 part of RD;
the activator comprised 4.0 parts of zinc oxide and 1.0 part of stearic acid;
the accelerator comprised 1.0 part of TiBTD and 1.5 parts of NS; and
the anti-reversion agent was WY9188.

A preparation method for the outside support rubber for the run-flat tire in the present embodiment was the same as that in embodiment 1.

### Embodiment 3

The outside support rubber for the run-flat tire in the present embodiment comprised the components in parts by weight: 83.75 parts of liquid process natural rubber, 50 parts of butadiene rubber, 8 parts of aramid short fiber, 25 parts of carbon black, 2.5 parts of first anti-aging agent, 5 parts of activator, 1.4 parts of sulfur, 2.5 parts of accelerator, and 1.0 part of anti-reversion agent;
wherein the liquid process natural rubber comprised 50 parts of rubber latex, 30 parts of silica, 3 parts of silane coupling agent Si69, and 0.75 parts of second anti-aging agent 4020;
the butadiene rubber was a modified low cis-polybutadiene rubber;
the first anti-aging agent comprised 1.5 parts of 4020 and 1.0 part of RD;
the activator comprised 4.0 parts of zinc oxide and 1.0 part of stearic acid;
the accelerator comprised 1.0 part of TiBTD and 1.5 parts of NS; and
the anti-reversion agent was WY9188.

A preparation method for the outside support rubber for the run-flat tire in the present embodiment was the same as that in embodiment 1.

### Embodiment 4

The outside support rubber for the run-flat tire in the present embodiment comprised the components in parts by weight: 70.13 parts of liquid process natural rubber, 60 parts of butadiene rubber, 10 parts of aramid short fiber, 30 parts of carbon black, 2.5 parts of first anti-aging agent, 5 parts of activator, 1.4 parts of sulfur, 2.5 parts of accelerator, and 1.0 part of anti-reversion agent;
wherein the liquid process natural rubber comprised 42 parts of rubber latex, 25 parts of silica, 2.5 parts of silane coupling agent Si69, and 0.63 parts of second anti-aging agent 4020;
the butadiene rubber was a modified low cis-polybutadiene rubber;
the first anti-aging agent comprised 1.5 parts of 4020 and 1.0 part of RD;
the activator comprised 4.0 parts of zinc oxide and 1.0 part of stearic acid;
the accelerator comprised 1.0 part of TiBTD and 1.5 parts of NS; and
the anti-reversion agent was WY9188.

A preparation method for the outside support rubber for the run-flat tire in the present embodiment was the same as that in embodiment 1.

### Comparative Example 1

The outside support rubber in the present comparative example comprised the components in parts by weight: 50 parts of natural rubber, 50 parts of neodymium-based butadiene rubber, 55 parts of carbon black, 2.25 parts of anti-aging agent 4020, 1 part of anti-aging agent RD, 4 parts of zinc oxide serving as an activator, 1 part of stearic acid serving as an activator, 1.4 parts of sulfur, 1.0 part of accelerator TiBTD, 1.5 part of accelerator NS, and 1.0 part of anti-reversion agent WY9188.

A preparation method for the outside support rubber in the present embodiment comprised the following steps:
first-stage masterbatch preparation: the natural rubber, the neodymium-based butadiene rubber, carbon black, zinc oxide, stearic acid and the anti-aging agents 4020 and RD were added into a closed rubber mixer according to the above-mentioned parts by weight and were uniformly mixed, and then, a first-stage masterbatch was obtained by discharging; and
second-stage final compound preparation: the above-mentioned first-stage masterbatch, sulfur, the accelerators TiBTD and NS and the anti-reversion agent WY9188 were added into a closed rubber mixer and were uniformly mixed, and then, a final compound was obtained by discharging.

### Comparative Example 2

The outside support rubber in the present comparative example comprised the components in parts by weight: 50 parts of natural rubber, 30 parts of silica, 1.6 parts of silane coupling agent Si69, 50 parts of modified low cis-polybutadiene rubber, 25 parts of carbon black, 2.25 parts of anti-aging agent 4020, 1 part of anti-aging agent RD, 4.0 parts of zinc oxide serving as an activator, 1.0 part of stearic acid serving as an activator, 1.4 parts of sulfur, 1.0 part of accelerator TiBTD, 1.5 part of accelerator NS, and 1.0 part of anti-reversion agent WY9188.

A preparation method for the outside support rubber in the present embodiment comprised the following steps:
first-stage masterbatch preparation: the natural rubber, the modified low cis-polybutadiene rubber, silica, carbon black, the silane coupling agent Si69, zinc oxide, stearic acid and the anti-aging agents 4020 and RD were added into a closed rubber mixer according to the above-mentioned parts by weight and were uniformly mixed, and then, a first-stage masterbatch was obtained by discharging; and
second-stage final compound preparation: the above-mentioned first-stage masterbatch, sulfur, the accelerators TiBTD and NS and the anti-reversion agent WY9188 were added into a closed rubber mixer and were uniformly mixed, and then, a final compound was obtained by discharging.

### Comparative Example 3

The outside support rubber in the present comparative example comprised the components in parts by weight: 50 parts of natural rubber, 30 parts of silica, 3 parts of silane coupling agent Si69, 50 parts of modified low cis-polybutadiene rubber, 3 parts of aramid short fiber, 25 parts of carbon black, 2.25 parts of anti-aging agent 4020, 1 part of anti-aging agent RD, 4.0 parts of zinc oxide serving as an activator, 1.0 part of stearic acid serving as an activator, 1.4 parts of sulfur, 1.0 part of accelerator TiBTD, 1.5 part of accelerator NS, and 1.0 part of anti-reversion agent WY9188.

A preparation method for the outside support rubber in the present embodiment comprised the following steps:
first-stage masterbatch preparation: the natural rubber, the modified low cis-polybutadiene rubber, silica, carbon black, the aramid short fiber, the silane coupling agent Si69, zinc oxide, stearic acid and the anti-aging agents 4020 and RD were added into a closed rubber mixer according to the above-mentioned parts by weight and were uniformly mixed, and then, a first-stage masterbatch was obtained by discharging; and
second-stage final compound preparation: the above-mentioned first-stage masterbatch, sulfur, the accelerators TiBTD and NS and the anti-reversion agent WY9188 were added into a closed rubber mixer and were uniformly mixed, and then, a final compound was obtained by discharging.

### Performance test

The final compounds obtained in the above embodiments 1 to 4 and comparative examples 1 to 3 were subjected to a modulus loss rate test, a heat accumulation test, a flexural resistance and tensile strength test, a dynamic mechanical performance test, and a durability test after a zero-pressure durability test.

The modulus loss rate test was performed according to the following steps: unvulcanized rubber of the outside support rubber was subjected to a simulation of flat running by a RPA, vulcanization was performed for 15min at the temperature of 161°C; then, the temperature was lowered to 60°C, the strain was set to be 42%, the frequency was set to be 60cpm, and the temperature, the strain and the frequency were kept for 5min, and a modulus G'₁ was recorded under the condition that the temperature was 60°C, the strain was 7% and the frequency was 600cpm; and after the modulus G'₁ was recorded, the temperature was raised to 150°C, the strain was set to be 42%, the frequency was set to be 480cpm, and the time was 30min, then, the temperature was lowered to 60°C, and a modulus G'₂ was recorded under the condition that the temperature was 60°C, the strain was 7% and the frequency was 600cpm, wherein |1-G'₂/G'₁|@600cpm was used to represent the modulus loss rate, and the smaller the modulus loss rate, the better the supporting performance of the run-flat tire during reuse;
the heat accumulation test was performed according to the following steps: vulcanization was performed for 20min under the condition that the temperature was 161 °C and the strain angle was 0.2°, then the temperature was lowered to 40°C as an initial temperature T₁, after the strain was set to be 28%, the frequency was set to be 700cpm, and a point T₂ was selected as an endpoint temperature after 30min, and the heat accumulation was calculated as: ΔT=T₂-T₁;
the flexural resistance test of the rubber was performed with reference to GB/T13934; the tensile strength test of the rubber was performed with reference to GB/T528;
the dynamic mechanical performance test was based on ISO 4664-1:2005, in which the initial strain was 7%, the dynamic strain was 1%, the frequency was 10Hz, the temperature was 70°C, and tanδwas used to represent hysteresis loss; and
a zero-pressure durability test was conducted on a tire according to GB/T 30196-2013 under the condition that the tire was driven for 30min at a speed of 60km/h, the tire was stood for 24h after the zero-pressure durability test was completed, and then, a durability test wasconducted according to the Chinese Standard GB/T4602 *Indoor Test Method for Performances of Car Tire,* and was used as a basis for determining the reusability of the run-flat tire.

**Table 1 performance test table of final compound obtained in embodiments 1 to 4 and comparative examples 1 to 3**

| | Embodi ment 1 | Embodi ment 2 | Embodi ment 3 | Embodi ment 4 | Compara tive Example 1 | Compara tive Example 2 | Compara tive Example 3 |
|---|---|---|---|---|---|---|---|
| Modulus loss rate of support rubber | 5% | 3% | 1% | 1% | 14% | 10% | 9% |
| ΔT | 21°C | 29°C | 25°C | 26°C | 38°C | 34°C | 35°C |
| Tensile strength (23°C)/MPa | 14.4 | 14.5 | 15.2 | 14.6 | 15.6 | 14.3 | 14.1 |
| Tensile strength (150°C)/MPa | 11.7 | 12.8 | 13.6 | 12.9 | 9.1 | 9.2 | 10.0 |
| Tensile strength retention rate % | 81% | 88% | 89% | 87% | 58% | 64% | 71% |
| Flexural performance (grade-1 crack)/time | 299000 | 297000 | 320000 | 340000 | 179000 | 188000 | 189000 |
| Tan δ @70°C | 0.050 | 0.051 | 0.056 | 0.054 | 0.071 | 0.063 | 0.060 |
| Durability index | 100 | 106 | 110 | 107 | 93 | 96 | 97 |

It can be known from the above test table that, compared with the comparative examples 1 to 3, the outside support rubber for the run-flat tire obtained in the embodiments 1 to 4 is lower in modulus loss rate, higher in tensile retention rate, better in durability, has greatly improved tensile fatigue resistance and flexural resistance, and higher in modulus retention rate.

In the test method for the outside support rubber in the embodiments of the present invention, the modulus loss rate obtained by simulation performed by the RPA device is consistent with the durability result obtained by the durability test, which indicates that the simulation result obtained by using the test method in the present invention is in good agreement with an actual driving state, and thus the test method provided in the present invention can be used as a test method for the outside support rubber for the run-flat tire to evaluate performance.

## Claims

1. An outside support rubber for a run-flat tire, **characterized in that**, a modulus loss rate of the outside support rubber satisfies: |1-G'₂/G'₁|≤6%, wherein G'₁ is a modulus obtained before a zero-pressure driving simulation of the run-flat tire, G'₂ is a modulus obtained after the zero-pressure driving simulation of the run-flat tire, and G'₁ and G'₂ are both measured under condition that a temperature is 55-60°C, a frequency is 600cpm, and a strain is 7%;
wherein G'1 , G'2 , the modulus loss rate and the zero-pressure driving simulation of the run-flat tire are obtained by the following method steps:
vulcanization: placing an unvulcanized outside support rubber for the run-flat tire in a mold cavity of a rubber processing analyzer, and setting a vulcanization temperature to be 161°C, a vulcanization time to be 15min, a strain to be 0.7% and a frequency to be 100cpm;
ordinary driving simulation of the run-flat tire: after vulcanization, lowering the temperature to 55°C-60°C, setting the strain to be 42% and the frequency to be 60cpm, and keeping the temperature, the strain and the frequency for 5min; and then keeping the temperature, setting the strain to be 7% and the frequency to be 600cpm, and recording the modulus G'₁ of the outside support rubber;
zero-pressure driving simulation of the run-flat tire: after the modulus G'₁ is measured, raising the temperature to 150°C-155°C, setting the strain to be 42% and the frequency to be 400-600cpm, and keeping the temperature, the strain and the frequency for 30min; then, lowering the temperature to 55°C-60°C, setting the strain to be 7% and the frequency to be 600cpm, and recording the modulus G'₂ of the outside support rubber; and
calculation of the modulus loss rate: calculating G'₂/G'₁ to represent a modulus retention rate, and calculating |1-G'₂/G'₁| to represent the modulus loss rate.

2. The outside support rubber for the run-flat tire according to claim 1, **characterized in that**, a heat accumulation of the outside support rubber satisfies: ΔT≤30°C, wherein ΔT=T₂-T₁, T₁ is an initial temperature set by lowering temperature after vulcanization for 20min under condition that a temperature is 161°C and a strain angle is 0.2°, and T₂ is measured at an endpoint after 30min under condition that the strain is 28% and the frequency is 700cpm.

3. The outside support rubber for the run-flat tire according to claim 2, **characterized in that**, a tensile strength retention rate of the outside support rubber satisfies: T.S.(150°C)/T.S.(23°C) ≥ 80%, wherein T.S.(150°C) is a tensile strength of the outside support rubber at 150°C; and T.S.(23°C) is a tensile strength of the outside support rubber at 23°C.

4. The outside support rubber for the run-flat tire according to claim 2, **characterized in that**, the outside support rubber comprises components in parts by weight:
70-90 parts of liquid process natural rubber;
40-60 parts of butadiene rubber;
1-10 parts of aramid short fiber;
20-40 parts of carbon black;
2-3 parts of first anti-aging agent;
3-5 parts of activator;
1-2 parts of sulfur;
2-3 parts of accelerator; and
0.5-1.5 parts of anti-reversion agent.

5. The outside support rubber for the run-flat tire according to claim 4, **characterized in that**, the liquid process natural rubber comprises the components in parts by weight:
40-60 parts of rubber latex;
20-40 parts of silica;
2-4 parts of silane coupling agent; and
0.5-1.5 parts of other compounding agents;
wherein other compounding agents are at least one of a second anti-aging agent and a dispersant.

6. The outside support rubber for the run-flat tire according to claim 4, **characterized in that**, the butadiene rubber is modified low cis-polybutadiene rubber, which uses a lithium-based catalyst and has cis content of 35%-45%.

7. The outside support rubber for the run-flat tire according to claim 4, **characterized in that**, a length of the aramid short fiber is 2-5mm.

8. The outside support rubber for the run-flat tire according to claim 4, **characterized in that**, the carbon black has an iodine absorption value of 35-50g/kg, and a dibutyl phthalate absorption value of 110×10⁻⁵-130×10⁻⁵m³/kg.

9. The outside support rubber for the run-flat tire according to claim 5, **characterized in that**, a specific surface area of the silica is 90-120m²/g; and the silane coupling agent is at least one of bis-(propyltriethoxysilane)tetrasulfide, bis-(propyltriethoxysilane)disulfide, and mercaptopropyltriethoxysilane.

10. A run-flat tire, comprising the outside support rubber for the run-flat tire according to any one of claims 1-9, wherein the outside support rubber is located between an inside support rubber and a carcass.

11. A test method for the outside support rubber for the run-flat tire according to any one of claims 1-9, comprising following steps:
vulcanization: placing an unvulcanized outside support rubber for the run-flat tire in a mold cavity of a rubber processing analyzer, and setting a vulcanization temperature to be 161°C, a vulcanization time to be 15min, a strain to be 0.7% and a frequency to be 100cpm;
ordinary driving simulation of the run-flat tire: after vulcanization, lowering the temperature to 55°C-60°C, setting the strain to be 42% and the frequency to be 60cpm, and keeping the temperature, the strain and the frequency for 5min; and then keeping the temperature, setting the strain to be 7% and the frequency to be 600cpm, and recording a modulus G'₁ of the outside support rubber;
zero-pressure driving simulation of the run-flat tire: after the modulus G'₁ is measured, raising the temperature to 150°C-155°C, setting the strain to be 42% and the frequency to be 400-600cpm, and keeping the temperature, the strain and the frequency for 30min; then, lowering the temperature to 55°C-60°C, setting the strain to be 7% and the frequency to be 600cpm, and recording a modulus G'₂ of the outside support rubber;
calculation of a modulus loss rate: calculating G'₂/G'₁ to represent a modulus retention rate, and calculating |1-G'₂/G'₁| to represent a modulus loss rate; and
two durability tests for the run-flat tire: the run-flat tire comprises the outside support rubber, and the outside support rubber is located between an inside support rubber and a carcass, performing an indoor machine tool test on the run-flat tire by driving the run-flat tire for 30min at a speed of 60km/h in a zero-pressure state to perform a first durability test, then, standing the tire for 24h, then, performing a second durability test at a non-zero pressure, and recording a test result.

12. The test method for the outside support rubber for the run-flat tire according to claim 11, **characterized in that**, in the step of ordinary driving simulation of the run-flat tire, the temperature used to measure the modulus G'₁ is 60°C; and after the modulus G'₁ is measured, in the step of zero-pressure driving simulation of the run-flat tire, raising the temperature to 150°Cand setting the frequency to be 480cpm, then keeping the temperature and the frequency for 30min.

## Patentansprüche

1. Außenstützgummi für einen Reifen mit Notlaufeigenschaften, **dadurch gekennzeichnet, dass** eine Modulverlustrate des Außenstützgummis erfüllt: |1-G'₂/G'₁|≤6 %, wobei G'₁ ein Modul ist, das vor einer drucklosen Fahrsimulation des Reifens mit Notlaufeigenschaften erhalten wurde, G'₂ ein Modul ist, das nach der drucklosen Fahrsimulation des Reifens mit Notlaufeigenschaften erhalten wird, und G'₁ und G'₂ beide unter der Bedingung gemessen werden, dass eine Temperatur 55-60 °C beträgt, eine Frequenz 600 cpm beträgt und eine Dehnung 7 % beträgt;
wobei G'₁, G'₂, die Modulverlustrate und die drucklose Fahrsimulation des Reifens mit Notlaufeigenschaften durch die folgenden Verfahrensschritte erhalten werden:
Vulkanisation: Platzieren eines nichtvulkanisierten äußeren Stützgummis für den Reifen mit Notlaufeigenschaften in eine Formhöhlung eines Analysators für die Gummiverarbeitung und Einstellen einer Vulkanisationstemperatur von 161 °C, einer Vulkanisationszeit von 15 min, eine Dehnung von 0,7 % und eine Frequenz von 100 U/min;
gewöhnliche Fahrsimulation des Reifens mit Notlaufeigenschaften: nach der Vulkanisation Senken der Temperatur auf 55 °C-60 °C, Einstellen der Dehnung auf 42 % und der Frequenz auf 60 cpm und Halten der Temperatur, der Dehnung und Frequenz für 5 min; und dann Halten der Temperatur, Einstellen der Dehnung auf 7 % und der Frequenz auf 600 cpm und Aufzeichnen des Moduls G'₁ des Außenstützgummis;
Simulation des drucklosen Fahrens des Reifens mit Notlaufeigenschaften: nachdem der Modul G'₁ gemessen wurde, Erhöhen der Temperatur auf 150 °C-155 °C, Einstellen der Dehnung auf 42 % und der Frequenz auf 400-600 cpm, und Halten der Temperatur, der Dehnung und der Frequenz 30 min lang; dann Senken der Temperatur auf 55 °C-60 °C, Einstellen der Dehnung auf 7 % und der Frequenz auf 600 cpm, und Aufzeichnen des Moduls G'₂ des Außenstützgummis; und
Berechnung der Modulverlustrate: Berechnen von G'₂/G'₁, um eine Modulerhaltungsrate darzustellen, und Berechnen von |1-G'₂/G'₁|, um die Modulverlustrate darstellen.

2. Außenstützgummi für den Reifen mit Notlaufeigenschaften nach Anspruch 1, **dadurch gekennzeichnet, dass** ein Wärmestau des Außenstützgummis erfüllt: ΔT≤30 °C, wobei ΔT=T₂-T₁ ist, T₁ eine Anfangstemperatur ist, die durch Senken der Temperatur nach der Vulkanisation für 20 min unter der Bedingung eingestellt wird, dass eine Temperatur 161 °C beträgt und ein Dehnungswinkel 0,2° beträgt, und T₂ an einem Endpunkt nach 30 min unter der Bedingung gemessen wird, dass die Dehnung 28 % beträgt und die Frequenz 700 cpm beträgt.

3. Außenstützgummi für den Reifen mit Notlaufeigenschaften nach Anspruch 2, **dadurch gekennzeichnet, dass** eine Zugfestigkeitserhaltungsrate des Außenstützgummis erfüllt: T.S.(150 °C)/T.S.(23 °C) ≥ 80 %, wobei T.S.(150 °C) eine Zugfestigkeit des Außenstützgummis bei 150 °C ist; und T.S.(23 °C) eine Zugfestigkeit des Außenstützgummis bei 23 °C ist.

4. Außenstützgummi für den Reifen mit Notlaufeigenschaften nach Anspruch 2, **dadurch gekennzeichnet, dass** der Außenstützgummi Bestandteile in Gewichtsteilen umfasst:
70-90 Teile flüssigen Prozessnaturkautschuk;
40-60 Teile Butadienkautschuk;
1-10 Teile Aramidakurzfaser;
20-40 Teile Ruß;
2-3 Teile eines ersten Alterungsschutzmittels;
3-5 Teile Aktivator;
1-2 Teile Schwefel;
2-3 Teile Beschleuniger; und
0,5-1,5 Teile eines Anti-Reversionsmittels.

5. Außenstützgummi für den Reifen mit Notlaufeigenschaften nach Anspruch 4, **dadurch gekennzeichnet, dass** der flüssige Prozessnaturkautschuk die Bestandteile in Gewichtsteilen umfasst:
40-60 Teile Kautschuklatex;
20-40 Teile Kieselsäure;
2-4 Teile Silanhaftvermittler; und
0,5-1,5 Teile eines anderen Mischungsmittels;
wobei die anderen Mischungsmittel wenigstens ein zweites Alterungsschutzmittel und ein Dispergiermittel ist.

6. Außenstützgummi für den Reifen mit Notlaufeigenschaften nach Anspruch 4, **dadurch gekennzeichnet, dass** der Butadienkautschuk ein modifizierter Niedrig-cis-Polybutadienkautschuk ist, der einen lithiumbasierten Katalysator verwendet und einen cis-Gehalt von 35 %-45 % aufweist.

7. Außenstützgummi für den Reifen mit Notlaufeigenschaften nach Anspruch 4, **dadurch gekennzeichnet, dass** eine Länge der Aramidkurzfaser 2-5 mm beträgt.

8. Außenstützgummi für den Reifen mit Notlaufeigenschaften nach Anspruch 4, **dadurch gekennzeichnet, dass** der Ruß einen Iodabsorptionswert von 35-50 g/kg und einen Dibutylphthalatabsorptionswert von 110×10⁻⁵-130×10⁻⁵m³/kg aufweist.

9. Außenstützgummi für den Reifen mit Notlaufeigenschaften nach Anspruch 5, **dadurch gekennzeichnet, dass** ein spezifischer Oberflächenbereich der Kieselsäure 90-120 m²/g beträgt; und der Silanhaftvermittler wenigstens eines von Bis-(propyltriethoxysilan)tetrasulfid, Bis-(propyltriethoxysilan)disulfid, und Mercaptopropyltriethoxysilan ist.

10. Reifen mit Notlaufeigenschaften, umfassend den Außenstützgummi für den Reifen mit Notlaufeigenschaften nach einem der Ansprüche 1-9, wobei sich der Außenstützgummi zwischen einem Innenstützgummi und einer Karkasse befindet.

11. Prüfverfahren des Außenstützgummis für den Reifen mit Notlaufeigenschaften nach einem der Ansprüche 1-9, umfassend die folgenden Schritte:
Vulkanisation: Platzieren eines nichtvulkanisierten Außenstützgummis für den Reifen mit Notlaufeigenschaften in eine Formhöhlung eines Analysators für die Gummiverarbeitung und Einstellen einer Vulkanisationstemperatur von 161 °C, einer Vulkanisationszeit von 15 min, eine Dehnung von 0,7 % und eine Frequenz von 100 U/min;
gewöhnliche Fahrsimulation des Reifens mit Notlaufeigenschaften: nach der Vulkanisation Senken der Temperatur auf 55 °C-60 °C, Einstellen der Dehnung auf 42 % und der Frequenz auf 60 cpm und Halten der Temperatur, der Dehnung und Frequenz für 5 min; und dann Halten der Temperatur, Einstellen der Dehnung auf 7 % und der Frequenz auf 600 cpm und Aufzeichnen eines Moduls G'₁ des Außenstützgummis;
Simulation des drucklosen Fahrens des Reifens mit Notlaufeigenschaften: nachdem der Modul G'₁ gemessen wurde, Erhöhen der Temperatur auf 150 °C-155 °C, Einstellen der Dehnung auf 42 % und der Frequenz auf 400-600 cpm, und Halten der Temperatur, der Dehnung und der Frequenz 30 min lang; dann Senken der Temperatur auf 55 °C-60 °C, Einstellen der Dehnung auf 7 % und der Frequenz auf 600 cpm, und Aufzeichnen eines Moduls G'₂ des Außenstützgummis; und
Berechnung der Modulverlustrate: Berechnen von G'₂/G'₁, um eine Modulerhaltungsrate darzustellen, und Berechnen von |1-G'₂/G'₁|, um eine Modulverlustrate darstellen; und
zwei Beständigkeitsprüfungen für den Reifen mit Notlaufeigenschaften: Der Notlaufreifen umfasst den Außenstützgummi und der Außenstützgummi befindet sich zwischen einem Innenstützgummi und einer Karkasse, Durchführen einer Werkzeugmaschinenprüfung im Innenraum an dem Reifen mit Notlaufeigenschaften durch Fahren des Reifens mit Notlaufeigenschaften für 30 min mit einer Geschwindigkeit von 60 km/h in einem drucklosen Zustand, um eine erste Beständigkeitsprüfung durchzuführen, dann Stehenlassen des Reifens für 24 h, dann Durchführen einer zweiten Beständigkeitsprüfung bei einem drucklosen Druck und Aufzeichnen eines Prüfungsergebnisses.

12. Prüfverfahren des Außenstützgummis für den Reifen mit Notlaufeigenschaften nach Anspruch 11, **dadurch gekennzeichnet, dass** in dem Schritt der gewöhnlichen Fahrsimulation des Reifens mit Notlaufeigenschaften die Temperatur, die für die Messung des Moduls G'₁ verwendet wird, 60 °C beträgt; und nachdem der Modul G'₁ gemessen wurde, in dem Schritt der drucklosen Fahrsimulation des Reifens mit Notlaufeigenschaften die Temperatur auf 150 °C erhöht wird und die Frequenz auf 480 cpm eingestellt wird und die Temperatur und die Frequenz dann für 30 min gehalten werden.

## Revendications

1. Caoutchouc de support extérieur pour pneu à roulage à plat, **caractérisé en ce qu'**un taux de perte de module du caoutchouc de support extérieur satisfait : |1 - G'₂ / G'₁| ≤ 6 %, où G'₁ représente un module obtenu avant une simulation de conduite à pression nulle du pneu à roulage à plat, G'₂ représente un module obtenu après la simulation de conduite à pression nulle du pneu à roulage à plat, et G'₁ et G'₂ sont tous deux mesurés dans des conditions où la température va de 55 à 60 °C, la fréquence est de 600 cpm et la déformation est de 7 % ;
étant entendu que G'₁, G'₂, le taux de perte de module et la simulation de conduite à pression nulle du pneu à roulage à plat sont obtenus selon les étapes de procédé suivantes :
vulcanisation : introduction d'un caoutchouc de support extérieur non vulcanisé pour le pneu à roulage à plat dans une cavité de moule d'un analyseur de traitement de caoutchouc, et établissement d'une température de vulcanisation à 161 °C, d'une durée de vulcanisation à 15 minutes, d'une déformation à 0,7 % et d'une fréquence à 100 cpm ;
simulation de conduite ordinaire du pneu à roulage à plat : après la vulcanisation, abaissement de la température à 55 °C-60 °C, établissement de la déformation à 42 % et de la fréquence à 60 cpm, et maintien de la température, de la déformation et de la fréquence pendant 5 minutes ; puis maintien de la température, établissement de la déformation à 7 % et de la fréquence à 600 cpm, et relevé du module G'₁ du caoutchouc de support extérieur ;
simulation de conduite à pression nulle du pneu à roulage à plat : après la mesure du module G'₁, augmentation de la température à 150 °C-155 °C, établissement de la déformation à 42 % et de la fréquence à 400-600 cpm, et maintien de la température, de la déformation et de la fréquence pendant 30 minutes ; puis abaissement de la température à 55 °C-60 °C, établissement de la déformation à 7 % et de la fréquence à 600 cpm, et relevé du module G'₂ du caoutchouc de support extérieur ; et
calcul du taux de perte de module : calcul de G'₂ / G'₁ pour représenter un taux de rétention de module, et calcul de |1 - G'₂ / G'₁| pour représenter le taux de perte de module.

2. Caoutchouc de support extérieur pour pneu à roulage à plat selon la revendication 1, **caractérisé en ce qu'**une accumulation de chaleur du caoutchouc de support extérieur satisfait : ΔT ≤ 30 °C, où ΔT = T₂ - T₁, T₁ représente une température initiale établie par un abaissement de la température après vulcanisation pendant 20 min dans des conditions où la température est de 161 °C et un angle de déformation est de 0,2°, et T₂ représente une mesure au terme de 30 min dans des conditions où la déformation est de 28 % et la fréquence est de 700 cpm.

3. Caoutchouc de support extérieur pour pneu à roulage à plat selon la revendication 2, **caractérisé en ce qu'**un taux de rétention de résistance à la traction du caoutchouc de support extérieur satisfait : T.S.(150 °C) / T.S.(23 °C) ≥ 80 %, où T.S.(150 °C) représente la résistance à la traction du caoutchouc de support extérieur à 150 °C, et T.S.(23 °C) représente la résistance à la traction du caoutchouc de support extérieur à 23 °C.

4. Caoutchouc de support extérieur pour pneu à roulage à plat selon la revendication 2, **caractérisé en ce que** le caoutchouc de support extérieur comprend les composants suivants, en parties en poids :
70 à 90 parties de caoutchouc naturel pour traitement à l'état liquide,
40 à 60 parties de caoutchouc butadiène,
1 à 10 parties de fibres courtes d'aramide,
20 à 40 parties de noir de carbone,
2 à 3 parties d'un premier agent anti-vieillissement,
3 à 5 parties d'activateur,
1 à 2 parties de soufre,
2 à 3 parties d'accélérateur, et
0,5 à 1,5 partie d'agent anti-réversion.

5. Caoutchouc de support extérieur pour pneu à roulage à plat selon la revendication 4, **caractérisé en ce que** le caoutchouc naturel de traitement liquide comprend les composants suivants, en parties en poids :
40 à 60 parties de latex de caoutchouc,
20 à 40 parties de silice,
2 à 4 parties d'agent de couplage silane, et
0,5 à 1,5 partie d'autres agents de mélange ;
les autres agents de mélange consistant en au moins un deuxième agent anti-vieillissement et/ou un dispersant.

6. Caoutchouc de support extérieur pour pneu à roulage à plat selon la revendication 4, **caractérisé en ce que** le caoutchouc butadiène est un caoutchouc modifié à faible teneur en cis-polybutadiène, qui met en œuvre un catalyseur à base de lithium et présente une teneur en cis de 35 % à 45 %.

7. Caoutchouc de support extérieur pour pneu à roulage à plat selon la revendication 4, **caractérisé en ce que** la longueur de la fibre courte d'aramide va de 2 à 5 mm.

8. Caoutchouc de support extérieur pour pneu à roulage à plat selon la revendication 4, **caractérisé en ce que** le noir de carbone présente une valeur d'absorption d'iode de 35 à 50 g/kg et une valeur d'absorption de phtalate de dibutyle de 110 × 10⁻⁵ à 130 × 10⁻⁵ m³/kg.

9. Caoutchouc de support extérieur pour pneu à roulage à plat selon la revendication 5, **caractérisé en ce que** la superficie spécifique de la silice va de 90 à 120 m²/g ; et l'agent de couplage de silane est le tétrasulfure de bis-(propyltriéthoxysilane), le disulfure de bis-(propyltriéthoxysilane) et/ou le mercaptopropyltriéthoxysilane.

10. Pneu à roulage à plat, comprenant le caoutchouc de support extérieur pour pneu à roulage à plat selon l'une quelconque des revendications 1 à 9, dans lequel le caoutchouc de support extérieur est situé entre un caoutchouc de support intérieur et la carcasse.

11. Procédé d'essai pour le caoutchouc de support extérieur pour pneu à roulage à plat selon l'une quelconque des revendications 1 à 9, comprenant les étapes suivantes :
vulcanisation : introduction d'un caoutchouc de support extérieur non vulcanisé pour le pneu à roulage à plat dans une cavité de moule d'un analyseur de traitement de caoutchouc, et établissement d'une température de vulcanisation à 161 °C, d'une durée de vulcanisation à 15 minutes, d'une déformation à 0,7 % et d'une fréquence à 100 cpm ;
simulation de conduite ordinaire du pneu à roulage à plat : après la vulcanisation, abaissement de la température à 55 °C-60 °C, établissement de la déformation à 42 % et de la fréquence à 60 cpm, et maintien de la température, de la déformation et de la fréquence pendant 5 minutes ; puis maintien de la température, établissement de la déformation à 7 % et de la fréquence à 600 cpm, et relevé du module G'₁ du caoutchouc de support extérieur ;
simulation de conduite à pression nulle du pneu à roulage à plat : après la mesure du module G'₁, augmentation de la température à 150 °C-155 °C, établissement de la déformation à 42 % et de la fréquence à 400-600 cpm, et maintien de la température, de la déformation et de la fréquence pendant 30 minutes ; puis abaissement de la température à 55 °C-60 °C, établissement de la déformation à 7 % et de la fréquence à 600 cpm, et relevé du module G'₂ du caoutchouc de support extérieur ; et
calcul du taux de perte de module : calcul de G'₂ / G'₁ pour représenter un taux de rétention de module, et calcul de |1 - G'₂ / G' ₁| pour représenter le taux de perte de module ; et
deux essais de durabilité pour le pneu à roulage à plat : le pneu à roulage à plat comprenant le caoutchouc de support extérieur, et le caoutchouc de support extérieur étant situé entre un caoutchouc de support intérieur et la carcasse, réalisation d'un essai sur machine-outil d'intérieur sur le pneu à roulage à plat en faisant rouler le pneu à roulage à plat pendant 30 minutes à une vitesse de 60 km/h dans un état de pression nulle pour effectuer un premier essai de durabilité, puis repos du pneu pendant 24 heures avant réalisation d'un deuxième essai de durabilité à une pression non nulle, et relevé du résultat d'essai.

12. Procédé d'essai pour caoutchouc de support extérieur de pneu à roulage à plat selon la revendication 11, **caractérisé en ce que**, dans l'étape de simulation de conduite ordinaire du pneu à roulage à plat, la température mise en œuvre pour mesurer le module G' ₁ est de 60 °C ; et après la mesure du module G'₁, dans l'étape de simulation de conduite à pression nulle du pneu à roulage à plat, on augmente la température à 150 °C et on établit la fréquence à 480 cpm, puis on maintient la température et la fréquence pendant 30 min.
